# EUROPÄISCHE PATENTSCHRIFT

(11) **EP 1 180 526 B1**
(45) Veröffentlichungstag und Bekanntmachung des Hinweises auf die Patenterteilung: **08.10.2003**
(21) Anmeldenummer: 01117733.4
(22) Anmeldetag: 30.07.2001
(51) Int. Cl.: C08B 11/193, C08B 11/08

(54) **Verfahren zur Herstellung von Alkylhydroxyalkylcellulose**
Process for the preparation of alkyl hydroxyalkyl cellulose
Procédé de préparation de cellulose alkylée et hydroxyalkylée

(30) Priorität: 10.08.2000 DE 10038978
(43) Veröffentlichungstag der Anmeldung: 20.02.2002
(73) Patentinhaber: Wolff Walsrode AG, 29655 Walsrode (DE)
(72) Erfinder: Dannhorn, Wolfgang, Dr., 29614 Soltau (DE); Schlesiger, Hartwig, Dr., 29683 Fallingbostel (DE); Pannek, Jörn-Bernd, Dr., 29683 Fallingbostel (DE); Weissbach, Gerolf, 51373 Leverkusen (DE)
(74) Vertreter: Pettrich, Klaus-Günter, Dr.

(56) Entgegenhaltungen:
- EP-A- 0 161 607
- DE-A- 4 015 160

## Beschreibung

Die hier beschriebene Erfindung betrifft ein Verfahren zur Herstellung von Alkylhydroxyalkylcellulosen, bevorzugt Methylhydroxyethylcellulose (MHEC) und Methylhydroxypropylcellulose (MHPC), besonders bevorzugt Methylhydroxypropylcellulose mit definiertem DS (degree of substitution) Methylgruppen und definiertem MS (molar substitution) Hydroxyalkylgruppen, bevorzugt Hydroxyethylgruppen und Hydroxypropylgruppen, besonders bevorzugt Hydroxypropylgruppen. Das erfindungsgemäße Verfahren gestattet bei hoher Chemikalienausbeute und guter Reproduzierbarkeit eine breite Variation der strukturellen Produktmerkmale anteilige und gesamte Substitutionshöhe sowie der Molekularität (Viskositätsergiebigkeit). Die resultierenden Produkte sind in Abhängigkeit vom Substitutionsgrad wasserlöslich bis löslich in organischen Solvenzien und können in unterschiedlichen Anwendungsbereichen, beispielsweise als Konsistenzregler und Verarbeitungshilfsmittel in mineralischen und dispersionsbasierenden Baustoffsystemen oder bei der Herstellung von kosmetischen und pharmazeutischen Präparaten, eingesetzt werden.

Die artenreiche Stoffklasse der Celluloseether, darunter die Gruppe der binären Alkylhydroxyalkylcellulosen mit dem kommerziell verwerteten Vertreter Methylhydroxypropylcellulose (MHPC), ist seit mehreren Jahrzehnten universitäres und industrielles Betätigungsfeld und vielfach beschrieben. Eine übersichtliche Darstellung der chemischen Grundlagen und Prinzipien der Herstellung (Herstellverfahren und Verfahrensschritte) sowie eine stoffliche Zusammenstellung und Beschreibung der Eigenschaften und Anwendungsmöglichkeiten der verschiedenen Derivate gibt beispielsweise Houben-Weyl, Methoden der Organischen Chemie, Makromolekulare Stoffe, 4. Auflage, Band E 20, S. 2042 (1987).

Die beschriebenen und angewandten Verfahren zur Herstellung von Alkylhydroxyalkylcellulosen, wie z.B. Methylhydroxypropylcellulose, beruhen entweder auf einer heterogenen (mehrphasiges Stoffgemisch) oder homogenen (z.B. einphasige Lösung) Reaktionsführung. Der Prozeßablauf selbst kann entweder diskontinuierlich (batch-Fahrweise) oder kontinuierlich gestaltet sein. Die heterogene Reaktionsführung wird weiterhin in das sog. Gasphasenverfahren (ohne fluides Reaktionsmedium) und das sog. Slurry-Verfahren (in Gegenwart eines fluiden Reaktionsmediums) unterschieden.

Sämtlichen beschriebenen und technisch umgesetzten Verfahrensvarianten zur Herstellung von Alkylhydroxyalkylcellulosen, z.B. Methylhydroxyalkylcellulose, liegt das folgende chemische Reaktionsprinzip zu Grunde:

In einem vorgelagerten Teilschritt erfolgt die Aktivierung des cellulosischen Ausgangsmaterials, vorzugsweise mit Alkalilauge. Nachfolgend wird die gebildete Alkalicellulose mit dem entsprechenden Alkylenoxid und Methylchlorid forciert umgesetzt, wobei zweckmäßig ggf. überschüssig eingesetztes Alkali mit überstöchiometrischen Mengen Methylchlorid weitgehend neutralisiert wird. Im anschließenden Reinigungsschritt werden gebildetes Salz und sonstige Nebenprodukte abgetrennt, vorzugsweise durch Heißwasserwäsche.

In der DE-A 2402740, der US-A 2949452 und der EP-B 134465 werden sogenannte Gasphasenverfahren zur Herstellung von MHPC beschrieben, bei denen keine fluiden bzw. kondensierten Medien während der Veretherungsreaktion zugegen sind. Vorteilig kann bei diesen Verfahren die Substitution (DS-Wert und MS-Wert) über einen breiten Bereich variiert werden. Wegen Fehlen eines fluiden Wärmeträgers kann jedoch die Exothermie der chemischen Reaktionen nur unzureichend kontrolliert werden, zudem tritt ein Verteilungsproblem für eingesetztes Alkali und die Reaktanden auf. In Summe äußert sich dies in einer nur mäßigen Reproduzierbarkeit der Substitution sowie einem unkontrollierten und relativ starken Molekulargewichtsabbau und damit in einem schwankenden Eigenschaftsprofil der Produkte; überdies sind hochviskose Produkte über das Gasphasenverfahren wegen des starken Molekulargewichtsabbaus nicht zugänglich.

Die beim Gasphasenverfahren genannten Probleme treten bei Anwesenheit eines fluiden Reaktionsmediums, wenn überhaupt, in viel geringerem Maße auf. Üblicherweise fungieren daher beim sog. Slurry-Verfahren inerte organische Solvenzien, der Reaktand Methylchlorid im Überschuß oder entsprechende Gemische hieraus als Verteilungsmedium und Wärmeträger. Das während der Aktivierungs- und Umsetzungsphase anwesende Reaktionsmedium bewirkt zum einen, über eine gleichmäßigere Alkalisierung der Cellulose und einen besseren Transport der Reaktanden in die Alkalicellulose, eine gleichmäßigere Substitution mit hoher Reproduzierbarkeit und Chemiekalienausbeute. Zum anderen wird über eine effektive Wärmeabfuhr der Prozeß insgesamt besser kontrollierbar und der Molekulargewichtsabbau infolge Vermeidung lokaler Überhitzung deutlich zurückgedrängt, sodass auch sehr hochviskose Produkte zugänglich sind. Wegen dieser prozeßtechnischen und produktseitigen Vorteile sind die großtechnischen Herstellverfahren weit überwiegend als Slurry-Verfahren realisiert.

Nachteilig bei dem Standard-Slurry-Verfahren, bei welchem während der Veretherungsphase die gesamten Reaktandenmengen Alkylenoxid und Methylchlorid nebeneinander vorliegen, ist der nur begrenzt einstellbare MS-Substitutionsgrad. Beispielsweise resultieren im Fall Methylhydroxypropylcellulose aus einer formal parallelen Umsetzung der Reaktanden ausschließlich Produkte mit hohem DS (Methyl) und niedrigem MS (Hydroxypropyl). Die umgekehrte Produktvariante, d.h. hoher MS (Hydroxypropyl) und mittlerer bis niedriger DS (Methyl), ist bei dieserart Verfahrensweise aus reaktionskinetischen Gründen auch durch Steigerung der Einsatzmenge Propylenoxid nicht zugänglich. Besagte hoch propoxylierte MC-Derivate sind jedoch gerade wegen einer Reihe substanzspezifischer Eigenschaften von Interesse.

Gemäß USA 4096325 sind hoch propoxylierte MC-Derivate darstellbar, wenn die Hydroxypropylierung und die Methylierung weitgehend getrennt durchgeführt werden. Als ebensolche Variante beschreibt z.B. EP-A 567869 die schrittweise Umsetzung der generierten Alkalicellulose zunächst mit Propylenoxid und nachfolgend in einem Lösungsmittel mit Methylchlorid. Dieserart lassen sich der DS-Wert und der MS-Wert gezielt über einen weiten Bereich variieren.

Bei den angeführten Verfahrensvarianten mit gestufter Reaktionsführung wird im allgemeinen die Hydroxypropylierung bei hohen Temperaturen durchgeführt. Dagegen erfolgt die Methylierung, bei per se stark exothermen Reaktionsverlauf, unter Gegenkühlung bei relativ niedrigeren Temperaturen. Aufgrund der langen Prozeßzeiten und des gegenläufigen Energiestromes sind diese Verfahren im Hinblick Wirtschaftlichkeit für eine großtechnische Umsetzung wenig geeignet. Zudem treten mit zunehmender Trennung der Reaktionsschritte, analog dem Gasphasenverfahren, Probleme hinsichtlich Gleichmäßigkeit und Reproduzierbarkeit der Substitution, Temperaturführung und Molekulargewichtsabbau (Viskositätsausbeute) auf.

Aufgrund der oben genannten Nachteile der bislang entwickelten und beschriebenen Herstellungsvarianten bestand fortgesetzt Bedarf in Richtung eines Verfahrens, welches sowohl die prozeßtechnischen und die produktbezogenen als auch die wirtschaftlichen Vorteile eines Slurry-Verfahrens mit einer dem Gasphasenverfahren entsprechenden Flexibilität bezüglich Erreichbarkeit und Gestaltung der anteiligen MS- und DS-Substitutionsgrade in einem weiten Bereich erbringt.

Hintergrund der vorliegend beschriebenen Erfindung war daher die Bereitstellung eines Verfahrens zur Herstellung von Alkylhydroxyalkylcellulosen, wie z.B. Methylhydroxyethylcellulose und Methylhydroxypropylcellulose, das bei hoher Reproduzierbarkeit und Chemikalienausbeute eine breite Variation der MS- und DS-Substitutionsgrade sowie der Produktviskositäten ermöglicht.

Überraschenderweise wurde eine Problemlösung derart gefunden, dass in Form eines Slurry-Verfahrens mit vergleichsweise geringer stöchiometrischer Entzerrung des Reaktionssystems und thermisch stark forcierter Prozeßführung die verfahrenstechnisch und wirtschaftlich bislang nur eingeschränkt bzw. nicht zugänglichen Produkte erhalten werden.

Die Erfindung betrifft ein gegenüber dem Stand der Technik verbessertes Verfahren zur Herstellung von Alkylhydroxyalkylcellulosen aus Cellulose und Alkylierungsmitteln in Gegenwart von Alkalilauge und einem oder mehreren Suspensionsmittel sowie die Separierung und Reinigung der Umsetzungsprodukte bevorzugt durch Heißwasserwäsche oder Wäsche mit organischen Medien.

Gegenstand der Erfindung ist ein Verfahren zur Herstellung von Alkylhydroxyalkylcellulosen aus der Umsetzung von Cellulose in Gegenwart von Alkali mit einem oder mehreren Alkylhalogeniden und einem oder mehreren Alkylenoxiden, dadurch gekennzeichnet, dass man
a) die Cellulose mit 1,5 bis 5,5 Equivalenten Alkalihydroxid pro AGU, eingesetzt vorwiegend als wässrige Lauge, in Gegenwart eines Suspensionsmittels, welches Alkylhalogenid in der nach folgender Formel berechneten Menge A = [Equivalente Alkalihydroxid pro AGU minus 1,4] bis [Equivalente Alkalihydroxid pro AGU plus 0,3] enthält, alkalisiert,
b) die alkalisierte Cellulose mit einem oder mehreren unterschiedlichen Alkylenoxiden bei einer Temperatur größer 65°C umsetzt, dann
c) weiteres Alkylhalogenid in einer Menge B aus mindestens der Differenz zwischen der bereits zudosierten Menge A an Equivalenten Alkylhalogenid pro AGU und der zudosierten Menge Alkalihydroxid pro AGU, wobei diese Menge B minimal 0,2 Äquivalente pro AGU beträgt, zudosiert und
d) wahlweise weiteres Alkylenoxid bei größer 65°C zusetzt, chemisch umsetzt und
e) die erhaltene Alkylhydroxyalkylcellulose aus dem Reaktionsproduktgemisch isoliert und erforderlichenfalls reinigt.

Als reaktionstechnischer Kernteil des erfindungsgemäß verbesserten Herstellverfahrens, wird Cellulose in Gegenwart von definierten Mengen und Verhältnissen an Alkylhalogenid und Suspensionsmittel zunächst alkalisiert (aktiviert), durch gezielte Zudosierung definierter Mengen Alkylenoxid in einer ersten Phase teilweise verethert und zur Vervollständigung der Veretherung in einer zweiten Phase jeweils eine weitere definierte Menge an Alkylhalogenid und erforderlichenfalls Alkylenoxid nachdosiert.

Als geeignetes Ausgangsmaterial ist Cellulose in Form von Holzzellstoff oder Baumwollinters zu nennen. Desweiteren können auch andere Polysaccharide, wie z.B. Guar, Stärke usw., eingesetzt werden. Die Lösungsviskosität der Veretherungsprodukte läßt sich durch geeignete Auswahl der Polysaccharide in weiten Bereichen variieren. Bevorzugt geeignet sind gemahlener Holzzellstoff und gemahlene Linters-Cellulose oder Mischungen aus diesen.

Die Alkalisierung (Aktivierung) der Polysaccharide erfolgt mit anorganischen Basen, bevorzugt mit Alkalihydroxiden in wässriger Lösung, wie Natriumhydroxid und Kaliumhydroxid, bevorzugt mit 35 bis 60 %iger Natronlauge, besonders bevorzugt mit 48 bis 52 %iger Natronlauge.

Als Suspensionsmittel können Dimethylether (DME), C₅-C₁₀-Alkane, wie z.B. Cyclohexan oder Pentan, Aromaten, wie z.B. Benzol oder Toluol, Alkohole, wie z.B. i-Propanol oder t-Butanol, Ketone, wie z.B. Butanon oder Pentanon, offenkettige oder cyclische Ether, wie z.B. Dimethoxyethan oder 1,4-Dioxan, sowie Mischungen der angeführten Suspensionsmittel in wechselnden Mengenverhältnissen eingesetzt werden. Das besonders bevorzugte inerte Suspensionsmittel ist Dimethylether (DME).

Für die O-Alkylierung eignen sich geradkettige oder verzweigte C₁ bis C₆-Alkylhalogenide, wie z.B. bevorzugt Methylchlorid (MCL), Ethylchlorid, Ethylbromid und Propylhalogenide, wie z.B. Propyljodid. Bevorzugt sind Methylchlorid und Ethylchlorid, besonders bevorzugt ist Methylchlorid. Ebenso können Alkylierungsreagenzien mit ionischen Funktionalitäten, wie z.B. Monochloressigsäure, N-(2-Chlorethyl)diethylamin und Vinylsulfonsäure, verwendet werden. Geeignete Reagenzien zum Einführen von Hydroxyalkylgruppierungen sind bevorzugt Ethylenoxid (EO), Propylenoxid (PO), Butylenoxid (BO) und Acrylnitril. Besonders bevorzugt ist Propylenoxid. Zur graduell variierbaren Vernetzung der Celluloseether im Zuge der Herstellung können bifunktionelle Reagenzien, wie z.B. bevorzugt Dichlorethan oder Epichlorhydrin, eingesetzt werden.

Das erfindungsgemäße Verfahren dient zur Herstellung von binären, ternären und quarternären Alkylhydroxyalkylcellulosen (AHAC), bevorzugt zur Herstellung der binären Derivate Methylhydroxyethylcellulose (MHEC) und Methylhydroxypropylcellulose (MHPC), besonders bevorzugt zur Herstellung von Methylhydroxypropylcellulose.

Bei der praktischen Durchführung des Verfahrens wird gemahlene oder zerfaserte Cellulose im Regelfall inertisiert vorgelegt. Anschließend wird das cellulosische Substrat in einem Gemisch aus DME/MCL I suspendiert, wobei das Verhältnis DME/MCL I 70/30 bis 20/80 Gewichtsteile, bevorzugt 65/35 bis 40/60 Gewichtsteile und besonders bevorzugt 60/40 bis 50/50 Gewichtsteile beträgt. Die Menge an MCL I im ersten Prozeßschritt ist wie folgt charakterisiert, wobei die Einheit "eq" für das molare Verhältnis des jeweiligen Einsatzstoffes relativ zur Anhydroglucoseeinheit (AGU) der eingesetzten Cellulose steht: minimal eq MCL I = eq NaOH pro AGU minus 1,4 sowie maximal eq MCL I = eq NaOH pro AGU plus 0,8. Die bevorzugte Menge an MCL I im ersten Prozeßschritt beträgt: minimal eq MCL I = eq NaOH pro AGU minus 1,0 sowie maximal eq MCL I = eq NaOH pro AGU plus 0,3. Die besonders bevorzugte Menge an MCL I im ersten Prozeßschritt beträgt: minimal eq MCL I = eq NaOH pro AGU minus 0,5 sowie maximal eq MCL I = eq NaOH pro AGU plus 0,1. Die am meisten bevorzugte Menge an MCL I im ersten Prozeßschritt beträgt minimal eq MCL I = eq NaOH pro AgU minus 0,5 sowie maximal eq MCL = eq NaOH pro AGU minus 0,1.

Die Alkalisierung der eingesetzen Cellulose erfolgt mit 1,5 bis 5,5 eq NaOH pro AGU, bevorzugt mit 2,2 bis 3,0 eq NaOH pro AGU, besonders bevorzugt mit 2,4 bis 2,9 eq NaOH pro AGU. In der Regel wird die Alkalisierung bei Temperaturen von 15 bis 50°C, bevorzugt um 40°C, und während 20 bis 80 Minuten, bevorzugt während 30 bis 60 Minuten, durchgeführt. Bevorzugt wird das NaOH in Form einer 35 bis 60 gewichtsprozentigen wässrigen Lösung eingesetzt, besonders bevorzugt als 48 bis 52 %ige Natronlauge.

Nach der Alkalisierungsphase wird das Hydroxyalkylierungsmittel, z.B. Propylenoxid (PO) bei der Herstellung von Methylhydroxypropylcellulose, zudosiert und die Reaktion thermisch durch Aufheizen forciert. Die Zugabe des Hyxdroxyalkylierungsmittels kann auch während der Aufheizphase geschehen. Die Reaktion mit dem Hydroxyalkylierungsmittel (beispielsweise PO) und MCL I erfolgt bei 60 bis 110°C, bevorzugt bei 70 bis 90°C, besonders bevorzugt bei 75 bis 85°C. Je nach angestrebter Substitutionshöhe wird die Zugabemenge an PO gezielt eingestellt. Für die in verschiedenen Anwendungsbereichen derzeit gängig eingesetzten MHPC-Produkte liegt die anzuwendende PO Menge bei 0,1 bis 5 eq pro AGU, bevorzugt bei 0,2 bis 2,5 eq pro AGU, besonders bevorzugt bei 0,4 bis 1,6 eq pro AGU. Die Zugabe des PO zum Reaktionssystem kann in einem oder portioniert in mehreren Dosierschritten erfolgen, bevorzugt ist die Dosierung in einem Schritt, besonders bevorzugt in einem Schritt direkt im Anschluß an die Alkalisierungsphase.

Nach der ersten Veretherungsphase wird ohne wesentliche Abkühlung die für die gewünschte Substitution mit Methylgruppen erforderliche Menge MCL II zugegeben, die wie folgt charakterisiert ist: minimal eq MCL II = eq NaOH minus eq MCL I plus 0,3, oder minimal eq MCL II = 0,2 eq MCL pro AGU, wenn die nach der vorangegangenen Formel berechnete Menge MCL II kleiner als 0,2 eq MCL pro AGU ist. Bevorzugt werden eq MCL II = 1 bis 3,5 eq MCL pro AGU, besonders bevorzugt eq MCL II = 1,5 bis 2,5 eq MCL pro AGU eingesetzt. Die Zugabe der Menge MCL II erfolgt bei einer Temperatur größer 65°C, bevorzugt bei 75 bis 90°C, beziehungsweise bei der Temperatur, die am Ende der Hydroxyalkylierungsphase herrscht.

Nach Ende der zweiten Veretherungsphase werden alle flüchtigen Bestandteile destillativ unter ggf. Anwendung von vermindertem Druck abgetrennt. Die Reinigung, Trocknung und Mahlung des resultierenden Produktes erfolgt nach den in der Cellulosederivat-Technologie üblichen Methoden gemäß dem Stand der Technik.

Die nachfolgenden Beispiele sollen das erfindungsgemäße Verfahren erläutern und die resultierenden Produkte beschreiben, ohne die Erfindung zu beschränken:

### Beispiele

In den folgenden Herstellungsbeispielen steht die Einheit "eq" für das molare Verhältnis des jeweiligen Einsatzstoffes relativ zur Anhydroglucoseeinheit (AGU) der eingesetzten Cellulose.

### Beispiele 1 bis 7 (MHPC)

In einem 5 l Autoklaven werden 260 g Baumwoll-Linters (Feuchte: 6,6 %; GVZ in Cuen: 1480 ml/g) durch Evakuieren und Beaufschlagen mit Stickstoff inertisiert. Anschließend wird ein Gemisch aus x g Dimethylether und y eq Methylchlorid in den Reaktor dosiert. Dann werden 2,6 eq Natriumhydroxid in Form einer 50 gew.-%igen wässrigen Natronlauge unter Rühren auf die Cellulose gesprüht. Nachdem 60 Minuten bei 25°C gerührt worden ist, werden 0,8 eq Propylenoxid in den Reaktor dosiert und das Gemisch wird auf 85°C geheizt. Nachdem 120 Minuten bei 85°C gerührt worden ist, werden bei dieser Temperatur z eq Methylchlorid in den Reaktor dosiert. Anschließend wird weitere 120 Minuten bei 85°C umgesetzt und dann gekühlt. Die flüchtigen Bestandteile werden abdestilliert und der Reaktor evakuiert. Das Rohprodukt wird zweimal einer Wäsche mit heißem Wasser unterworfen, anschließend getrocknet und gemahlen.

Der Substitutionsgrad an Methylgruppen DS (M), der Substitutionsgrad an Hydroxypropylgruppen MS (HP) und die Viskosität (V2 in mPa.s) in 2 gew.-%iger wässriger Lösung (Rotationsviskosimeter; D = 2,55 s⁻¹; 20°C) der so erhaltenen Methylhyroxypropylcelluloseether sind in Tabelle 1 aufgeführt. Der NaCl-Gehalt betrug bei allen Produkten weniger als 0,1 Gew.-%.

**Tabelle 1**

| Beispiel Nr. | x (g) | y (eq) | z (eq) | y+z (eq) | DS (M) | MS (HP) | V2 (mPa.s) | Vergleich/ Erfindung |
|---|---|---|---|---|---|---|---|---|
| 1. | 401 | 4,33 | 0 | 4,33 | 1,58 | 0,21 | 29.000 | V |
| 2. | 334 | 3,61 | 0,72 | 4,33 | 1,58 | 0,26 | 63.100 | V |
| 3. | 268 | 2,89 | 1,44 | 4,33 | 1,52 | 0,31 | 60.400 | E |
| 4. | 201 | 2,17 | 2,16 | 4,33 | 1,55 | 0,34 | 59.000 | E |
| 5. | 134 | 1,44 | 2,89 | 4,33 | 1,48 | 0,36 | 69.400 | E |
| 6. | 67 | 0,72 | 3,61 | 4,33 | 1,47 | 0,38 | 36.000 | V |
| 7. | 0 | 0 | 4,33 | 4,33 | 1,42 | 0,39 | 10.300 | V |

### Beispiele 8 bis 14 (MHPC)

In einem 5 l Autoklaven werden 260 g Baumwoll-Linters (Feuchte 6,6 %; GVZ in Cuen: 1480 ml/g) durch Evakuieren und Beaufschlagen mit Stickstoff inertisiert. Anschließend wird ein Gemisch aus x g Dimethylether und y eq Methylchlorid in den Reaktor dosiert. Dann werden 2,6 eq Natriumhydroxid in Form einer 50 gew.-%igen wässrigen Natronlauge unter Rühren auf die Cellulose gesprüht. Nachdem 60 Minuten bei 25°C gerührt worden ist, werden 0,8 eq Propylenoxid in den Reaktor dosiert und das Gemisch wird auf 85°C geheizt. Nachdem 40 Minuten bei 85°C gerührt worden ist, werden weitere 1,0 eq Propylenoxid innerhalb 10 min in den Reaktor dosiert. Nachdem weitere 70 Minuten bei 85°C gerührt worden ist, werden bei dieser Temperatur z eq Chlormethan in den Reaktor dosiert. Anschließend wird weitere 120 Minuten bei 85°C umgesetzt und dann gekühlt. Die flüchtigen Bestandteile werden abdestilliert und der Reaktor evakuiert. Das Rohprodukt wird zweimal einer Wäsche mit heißem Wasser unterworfen, anschließend getrocknet und gemahlen.

Der Substitutionsgrad an Methylgruppen DS (M), der Substitutionsgrad an Hydroxypropylgruppen MS (HP) und die Viskosität (V2 in mPa.s) in 2 gew.-%iger wässriger Lösung (Rotationsviskosimeter; D = 2,55 s⁻¹; 20°C) der so erhaltenen Methylhdroxypropylcelluloseether sind in Tabelle 2 aufgeführt. Der NaCl-Gehalt betrug bei allen Produkten weniger als 0,1 Gew.-%.

**Tabelle 2**

| Beispiel Nr. | x (g) | y (eq) | z (eq) | y+z (eq) | DS (M) | MS (HP) | V2 (mPa.s) | Vergleich/ Erfindung |
|---|---|---|---|---|---|---|---|---|
| 8. | 401 | 4,33 | 0 | 4,33 | 1,56 | 0,25 | 50.600 | V |
| 9. | 334 | 3,61 | 0,72 | 4,33 | 1,62 | 0,37 | 64.900 | V |
| 10. | 268 | 2,89 | 1,44 | 4,33 | 1,55 | 0,52 | 49.900 | E |
| 11. | 201 | 2,17 | 2,16 | 4,33 | 1,50 | 0,69 | 46.200 | E |
| 12. | 134 | 1,44 | 2,89 | 4,33 | 1,42 | 0,71 | 41.400 | E |
| 13. | 67 | 0,72 | 3,61 | 4,33 | 1,39 | 0,77 | 30.900 | V |
| 14. | 0 | 0 | 4,33 | 4,33 | 1,32 | 0,81 | 15.900 | V |

### Beispiele 15 bis 20 (MHPC)

In einem 5 l Autoklaven werden 257 g Baumwoll-Linters (Feuchte 5,5 %; GVZ in Cuen: 1480 ml/g) durch Evakuieren und Beaufschlagen mit Stickstoff inertisiert. Anschließend wird ein Gemisch aus 201 g Dimethylether und y eq Chlormethan in den Reaktor dosiert. Dann werden 2,6 eq Natriumhydroxid in Form einer 50 gew.-%igen wässrigen Natronlauge unter Rühren auf die Cellulose gesprüht. Nachdem 60 Minuten bei 25°C gerührt worden ist, werden v eq Propylenoxid in den Reaktor dosiert und das Gemisch wird auf 85°C geheizt. Nachdem 180 Minuten bei 85°C gerührt worden ist werden bei dieser Temperatur z eq Chlormethan in den Reaktor dosiert. Anschließend wird weitere 120 Minuten bei 85°C umgesetzt und dann gekühlt. Die flüchtigen Bestandteile werden abdestilliert und der Reaktor evakuiert. Das Rohprodukt wird zweimal einer Wäsche mit heißem Wasser unterworfen, anschließend getrocknet und gemahlen.

Der Substitutionsgrad an Methylgruppen DS (M), der Substitutionsgrad an Hydroxypropylgruppen MS (HP) und die Viskosität (V2 in mPa.s) in 2 gew.-%iger wässriger Lösung (Rotationsviskosimeter; D = 2,55 s⁻¹; 20°C) der so erhaltenen Methylhdroxypropylcelluloseether sind in Tabelle 3 aufgeführt. Der NaCl-Gehalt betrug bei allen Produkten weniger als 0,1 Gew.-%.

**Tabelle 3**

| Beispiel Nr. | v (eq) | y (eq) | z (eq) | y+z (eq) | DS (M) | MS (HP) | V2 (mPa.s) | Vergleich/ Erfindung |
|---|---|---|---|---|---|---|---|---|
| 15. | 1 | 2,17 | 2,16 | 4,33 | 1,57 | 0,30 | 64.900 | E |
| 16. | 1 | 4,33 | 0 | 4,33 | 1,65 | 0,25 | 14.000 | V |
| 17. | 3 | 2,17 | 2,16 | 4,33 | 1,34 | 1,08 | 41.200 | E |
| 18. | 3 | 4,33 | 0 | 4,33 | 1,59 | 0,65 | 10.700 | V |
| 19. | 5 | 2,17 | 2,16 | 4,33 | 1,31 | 1,76 | 16.900 | E |
| 20. | 5 | 4,33 | 0 | 4,33 | 1,53 | 0,89 | 9.300 | V |

### Beispiele 21 bis 28 (MHPC)

In einem 5 l Autoklaven werden 250 g Baumwoll-Linters (Feuchte 2,8 %; GVZ in Cuen: 1750 ml/g) durch Evakuieren und Beaufschlagen mit Stickstoff inertisiert. Anschließend wird ein Gemisch aus x g Dimethylether und 164 g (= y¹) Methylchlorid in den Reaktor dosiert. Dann werden 2,6 eq Natriumhydroxid in Form einer 50 gew.-%igen wässrigen Natronlauge unter Rühren auf die Cellulose gesprüht. Nachdem 60 Minuten bei 25°C gerührt worden ist, werden 0,8 eq Propylenoxid in den Reaktor dosiert und das Gemisch wird auf 85°C geheizt. Nachdem 120 Minuten bei 85°C gerührt worden ist, werden bei dieser Temperatur weitere 164 g (= y²) Methylchlorid in den Reaktor dosiert. Anschließend wird weitere 120 Minuten bei 85°C umgesetzt und dann gekühlt. Die flüchtigen Bestandteile werden abdestilliert und der Reaktor evakuiert. Das Rohprodukt wird zweimal einer Wäsche mit heißem Wasser unterworfen, anschließend getrocknet und gemahlen.

Der Substitutionsgrad an Methylgruppen DS (M), der Substitutionsgrad an Hydroxypropylgruppen MS (HP) und die Viskosität (V1 in mPa.s) in 1 gew.-%iger wässriger Lösung (Rotationsviskosimeter; D = 2,55 s⁻¹; 20°C) der so erhaltenen Methylhydroxypropylcelluloseether sind in Tabelle 4 aufgeführt. Der NaCl-Gehalt betrug bei allen Produkten weniger als 0,1 Gew.-%.

**Tabelle 4**

| Beispiel Nr. | x (g) | x/y¹ (Gew.%) | y² (g) | DS (M) | MS (HP) | V1 (mPa.s) | Vergleich/ Erfindung |
|---|---|---|---|---|---|---|---|
| 21. | 305 | 65/35 | 164 | 1,54 | 0,36 | 11.600 | E |
| 22. | 247 | 60/40 | 164 | 1,56 | 0,34 | 14.200 | E |
| 23. | 201 | 55/45 | 164 | 1,55 | 0,34 | 9.800 | E |
| 24. | 164 | 50/50 | 164 | 1,52 | 0,34 | 12.600 | E |
| 25. | 135 | 45/55 | 164 | 1,51 | 0,33 | 12.100 | E |
| 26. | 110 | 40/60 | 164 | 1,51 | 0,32 | 12.800 | E |
| 27. | 89 | 35/65 | 164 | 1,55 | 0,36 | 15.300 | E |
| 28. | 0 | 0/100 | 164 | 1,52 | 0,31 | 3.800 | V |

### Beispiele 29 bis 30 (MHBC)

In einem 5 l Autoklaven werden 250 g (1,5 mol) Baumwoll-Linters (Feuchte 2,8 %; GVZ in Cuen: 1750 ml/g) durch Evakuieren und Beaufschlagen mit Stickstoff inertisiert. Anschließend wird ein Gemisch aus x g Dimethylether und y eq Methylchlorid in den Reaktor dosiert. Dann werden 2,6 eq Natriumhydroxid in Form einer 50 gew.-%igen wässrigen Natronlauge unter Rühren auf die Cellulose gesprüht. Nachdem 60 Minuten bei 25°C gerührt worden ist, werden 108 g Butylenoxid in den Reaktor dosiert und das Gemisch wird auf 85°C geheizt. Nachdem 180 Minuten bei 85°C gerührt worden ist werden bei dieser Temperatur z eq Methylchlorid in den Reaktor dosiert. Anschließend wird weitere 120 Minuten bei 85°C umgesetzt und dann gekühlt. Die flüchtigen Bestandteile werden abdestilliert und der Reaktor evakuiert. Das Rohprodukt wird zweimal einer Wäsche mit heißem Wasser unterworfen, anschließend getrocknet und gemahlen.

Der Substitutionsgrad an Methylgruppen DS (M), der Substitutionsgrad an Hydroxybutylgruppen MS (HB) und die Viskosität (V2 in mPa.s) in 2 gew.%iger wässriger Lösung (Rotationsviskosimeter; D = 2,55 s⁻¹; 20°C) der so erhaltenen Methylhydroxybutylcelluloseether sind in Tabelle 5 aufgeführt. Der NaCl-Gehalt betrug bei allen Produkten weniger als 0,1 Gew.-%.

**Tabelle 5**

| Beispiel | x (g) | y (eq) | z (eq) | y+z (eq) | DS (M) | MS (HB) | V2 (mPa.s) | Vergleich/ Erfindung |
|---|---|---|---|---|---|---|---|---|
| 29. | 201 | 2,17 | 2,16 | 4,33 | 1,61 | 0,44 | 67800 | E |
| 30. | 201 | 4,33 | 0 | 4,33 | 1,49 | 0,11 | 30100 | V |

### Beispiele 31 bis 32 (MHEHPC)

In einem 5 l Autoklaven werden 254 g Baumwoll-Linters (Feuchte 4,2 %; GVZ in Cuen: 1750 ml/g) durch Evakuieren und Beaufschlagen mit Stickstoff inertisiert. Anschließend wird ein Gemisch aus x g Dimethylether und y eq Methylchlorid in den Reaktor dosiert. Dann werden 2,6 eq Natriumhydroxid in Form einer 50 gew.-%igen wässrigen Natronlauge unter Rühren auf die Cellulose gesprüht. Nachdem noch 60 Minuten bei 25°C gerührt worden ist, werden 0,6 eq Propylenoxid und 0,4 eq Ethylenoxid in den Reaktor dosiert und das Gemisch wird auf 85°C geheizt. Nachdem 120 Minuten bei 85°C gerührt worden ist, werden bei dieser Temperatur z eq Methylchlorid in den Reaktor dosiert. Anschließend wird weitere 120 Minuten bei 85°C umgesetzt und dann gekühlt. Die flüchtigen Bestandteile werden abdestilliert und der Reaktor evakuiert. Das Rohprodukt wird zweimal einer Wäsche mit heißem Wasser unterworfen, anschließend getrocknet und gemahlen.

Der Substitutionsgrad an Methylgruppen DS (M), der Substitutionsgrad an Hydroxyethylgruppen MS (HE), der Substitutionsgrad an Hydroxypropylgruppen MS (HP) und die Viskosität (V2 in mPa.s) in 2 gew.-%iger wässriger Lösung (Rotationsviskosimeter; D = 2,55 s⁻¹; 20°C) der so erhaltenen Methylhydroxyethylhydroxypropylcelluloseether sind in Tabelle 6 aufgeführt. Der NaCl-Gehalt betrug bei allen Produkten weniger als 0,1 Gew.-%.

**Tabelle 6**

| Beispiel Nr. | x (g) | y (eq) | z (eq) | y+z (eq) | DS (M) | MS (HP) | MS (HE) | V2 (mPa.s) | Vergleich/ Erfindung |
|---|---|---|---|---|---|---|---|---|---|
| 31. | 201 | 4,33 | 0 | 4,33 | 1,50 | 0,16 | 0,17 | 71000 | V |
| 32. | 201 | 2,17 | 2,16 | 4,33 | 1,52 | 0,26 | 0,26 | 70400 | E |

### Beispiele 33 bis 34 (MHBHPC)

In einem 5 l Autoklaven werden 254 g Baumwoll-Linters (Feuchte 4,2 %; GVZ in Cuen: 1750 ml/g) durch Evakuieren und Beaufschlagen mit Stickstoff inertisiert. Anschließend wird ein Gemisch aus x g Dimethylether und y eq Methylchlorid in den Reaktor dosiert. Dann werden 2,6 eq Natriumhydroxid in Form einer 50 gew.-%igen wässrigen Natronlauge unter Rühren auf die Cellulose gesprüht. Nachdem 60 Minuten bei 25°C gerührt worden ist, werden 0,5 eq Butylenoxid und 0,5 eq Propylenoxid in den Reaktor dosiert und das Gemisch wird auf 85°C geheizt. Nachdem 180 Minuten bei 85°C gerührt worden ist, werden bei dieser Temperatur z eq Chlormethan in den Reaktor dosiert. Anschließend wird weitere 120 Minuten bei 85°C umgesetzt und dann gekühlt. Die flüchtigen Bestandteile werden abdestilliert und der Reaktor evakuiert. Das Rohprodukt wird zweimal einer Wäsche mit heißem Wasser unterworfen, anschließend getrocknet und gemahlen.

Der Substitutionsgrad an Methylgruppen DS (M), der Substitutionsgrad an Hydroxybutylgruppen MS (HB), der Substitutionsgrad an Hydroxypropylgruppen MS (HP) und die Viskosität (V2 in mPa.s) in 2 gew.-%iger wässriger Lösung (Rotationsviskosimeter; D = 2,55 s⁻¹; 20°C) der so erhaltenen Methylhydroxybutylhydroxypropylcelluloseether sind in Tabelle 7 gelistet. Der NaCl-Gehalt betrug bei allen Produkten weniger als 0,1 Gew.-%.

**Tabelle 7**

| Beispiel Nr. | x (g) | y (eq) | z (eq) | y+z (eq) | DS (M) | MS (HP) | MS (HB) | V2 (mPa.s) | Vergleich/ Erfindung |
|---|---|---|---|---|---|---|---|---|---|
| 33. | 201 | 4,33 | 0 | 4,33 | 1,49 | 0,12 | 0,06 | 72400 | V |
| 34. | 201 | 2,17 | 2,16 | 4,33 | 1,55 | 0,22 | 0,20 | 68700 | E |

## Patentansprüche

1. Verfahren zur Herstellung von Alkylhydroxyalkylcellulose aus der Umsetzung von Cellulose in Gegenwart von Alkali mit Alkylhalogenid und einem oder mehreren Alkylenoxiden, **dadurch gekennzeichnet, dass** man
a) Cellulose mit 1,5 bis 5,5 Equivalenten Alkalihydroxid pro Anhydroglucose einheit AGU, eingesetzt als wässrige Lauge, in Gegenwart eines Suspensionsmittels, welches Alkylhalogenid in der nach folgender Formel berechneten Menge: [Equivalente Alkalihydroxid pro AGU minus 1,4] bis [Equivalente Alkalihydroxid pro AGU plus 0,8] enthält, alkalisiert,
b) die alkalisierte Cellulose mit einem oder mehreren Alkylenoxiden bei einer Temperatur größer 65°C umsetzt,
c) dann wiederum Alkylhalogenid in einer Menge aus mindestens der Differenz zwischen der bereits zudosierten Menge an Equivalenten Alkylhalogenid pro AGU und der zudosierten Menge Alkalihydroxid pro AGU, wobei diese Menge minimal 0,2 Equivalente pro AGU beträgt, zudosiert und
d) die erhaltene Alkylhydroxyalkylcellulose aus dem Reaktionsgemisch isoliert und gegebenenfalls reinigt.

2. Verfahren nach Anspruch 1, **dadurch gekennzeichnet, dass** man als Suspensionsmittel Dimethylether einsetzt.

3. Verfahren nach einem der Ansprüche 1 bis 2, **dadurch gekennzeichnet, dass** man als Alkylhalogenid ein Alkylhalogenid aus der Gruppe Methylchlorid, Ethylchlorid, Ethylbromid, Propyljodid einsetzt.

4. Verfahren nach Anspruch 3, **dadurch gekennzeichnet, dass** in Schritt a das Verhältnis Dimethylether/Methylchlorid im Bereich von 76/30 bis 20/80 Geweichtsteilen liegt.

5. Verfahren nach einem der vorherigen Ansprüche, **dadurch gekennzeichnet, dass** man als Alkylenoxid ein oder mehrere Alkylenoxide aus der Gruppe Ethylenoxid, Propylenoxid, Butylenoxid einzeln oder als Gemische einsetzt.

6. Verfahren nach einem der vorherigen Ansprüche, **dadurch gekennzeichnet, dass** die alkalisierte Cellulose in den Schritten b) und c) bei einer Temperatur im Bereich von 65 bis 110°C mit einem oder mehreren Alkylenoxiden und mindestens einem Alkylhalogenid umgesetzt wird, wobei die Dosierung der Menge Alkylhalogenid, die in Schritt c) dosiert wird, in diesem Temperaturbereich stattfindet.

7. Verfahren nach Anspruch 1, **dadurch gekennzeichnet, dass** als Alkylhydroxyalkylcellulose bevorzugt Methylhydroxypropylcellulose (MHPC) hergestellt wird.

## Claims

1. A process for preparing alkylhydroxyalkyl cellulose by reacting cellulose in the presence of alkali with alkyl halides and one or more alkylene oxides, **characterised in that**
a) cellulose is alkalised with 1.5 to 5.5 equivalents of alkali metal hydroxide per anhydroglucose unit (AGU), used as an aqueous caustic solution, in the presence of a suspension agent which contains alkyl halide in the amount calculated using the following formula: [equivalents of alkali metal hydroxide per AGU minus 1.4] to [equivalents of alkali metal hydroxide per AGU plus 0.8],
b) the alkalised cellulose is reacted with one or more alkylene oxides at a temperature higher than 65°C,
c) alkyl halide is again added in an amount consisting of at least the difference between the amount of equivalents of alkyl halide per AGU already added and the amount of alkali metal hydroxide added per AGU, wherein this amount is a minimum of 0.2 equivalents per AGU, and
d) the alkylhydroxyalkyl cellulose obtained is isolated from the reaction mixture and optionally purified.

2. A process according to Claim 1, **characterised in that** dimethyl ether is used as suspension agent.

3. A process according to one of Claims 1 to 2, **characterised in that** an alkyl halide from the group methyl chloride, ethyl chloride, ethyl bromide, propyl iodide is used as the alkyl halide.

4. A process according to Claim 3, **characterised in that**, in step a), the ratio dimethyl ether/methyl chloride is in the range 76:30 bis 20:80 parts by weight.

5. A process according to one of the preceding Claims, **characterised in that** one or more alkylene oxides from the group ethylene oxide, propylene oxide, butylene oxide is used as alkylene oxide, individually or as a mixture.

6. A process according to one of the preceding Claims, **characterised in that** the alkalised cellulose is reacted in steps b) and c) at a temperature in the range 65 to 110°C with one or more alkylene oxides and at least one alkyl halide, wherein addition of the amount of alkyl halide added in step c) takes place in this temperature range.

7. A process according to Claim 1, **characterised in that** methylhydroxypropyl cellulose (MHPC) is preferably prepared as the alkylhydroxyalkyl cellulose.

## Revendications

1. Procédé de préparation d'alkylhydroxyalkyl-cellulose par réaction de cellulose en présence d'alcali avec un halogénure d'alkyle et un ou plusieurs oxydes d'alkylène, **caractérisé en ce que**
a) on alcalinise la cellulose avec 1,5 à 5,5 équivalents d'hydroxyde alcalin par unité d'anhydroglucose AGU, utilisé comme lessive alcaline aqueuse, en présence d'un agent de suspension, qui contient un halogénure d'alkyle en quantités calculées selon la formule suivante : [équivalents d'hydroxyde alcalin par AGU moins 1,4] à [équivalents d'hydroxyde alcalin par AGU plus 0,3],
b) on fait réagir la cellulose alcalinisée avec un ou plusieurs oxydes d'alkylène différents à une température supérieure à 65°C, puis
c) on dose de nouveau un halogénure d'alkyle en une quantité d'au moins la différence entre la quantité déjà dosée en équivalents d'halogénure d'alkyle par AGU et la quantité à doser d'hydroxyde alcalin par AGU, cette quantité étant au minimum 0,2 équivalent par AGU, et
d) on isole l'alkylhydroxyalkylcellulose obtenue du mélange réactionnel et en éventuellement on la purifie.

2. Procédé selon la revendication 1, **caractérisé en ce qu'**on utilise comme agent de suspension l'éther de diméthyle.

3. Procédé selon l'une des revendications 1 à 2, **caractérisé en ce qu'**on utilise comme halogénure d'alkyle un halogénure d'alkyle du groupe formé par le chlorure de méthyle, le chlorure d'éthyle, le bromure d'éthyle, l'iodure de propyle.

4. Procédé selon la revendication 3, **caractérisé en ce que** dans l'étape a le rapport éther de diméthyle/chlorure de méthyle est dans la plage de 76/30 à 20/80 parties en poids.

5. Procédé selon l'une des revendications précédentes, **caractérisé en ce qu'**on utilise comme oxyde d'alkylène un ou plusieurs oxydes d'alkylène du groupe formé par l'oxyde d'éthylène, l'oxyde de propylène, l'oxyde de butylène seul ou en mélange.

6. Procédé selon l'une des revendications précédentes, **caractérisé en ce qu'**on fait réagir la cellulose alcaline dans les étapes b) et c) à une température dans la plage de 65 à 110°C avec un ou plusieurs oxydes d'alkylène et au moins un halogénure d'alkyle, le dosage de la quantité d'halogénure d'alkyle qui est dosé dans l'étape c), ayant lieu dans cette plage de température.

7. Procédé selon la revendication 1, **caractérisé en ce qu'**on prépare de préférence comme alkylhydroxyalkylcellulose de la methylhydroxypropylcellulose.
